# EUROPEAN PATENT APPLICATION

(11) **EP 4 525 362 A1**
(43) Date of publication of application: **19.03.2025**
(21) Application number: 23802733.8
(22) Date of filing: 04.05.2023
(51) Int. Cl.: H04L 9/40, H04W 12/02

(54) **PRIVACY PROTECTION INFORMATION PROCESSING METHOD AND APPARATUS, AND COMMUNICATION DEVICE**

(30) Priority: 07.05.2022 CN 202210494961
(71) Applicant: Vivo Mobile Communication Co., Ltd., Dongguan, Guangdong 523863 (CN)
(72) Inventor: WANG, Hui, Dongguan, Guangdong 523863 (CN); KANG, Yanchao, Dongguan, Guangdong 523863 (CN); YU, Hang, Dongguan, Guangdong 523863 (CN)
(74) Representative: Cabinet Beaumont
(86) International application number: PCT/CN2023/092031
(87) International publication number: WO 2023/216961

(57) **Abstract**

This application discloses a privacy protection information processing method and apparatus, and a communication device, and pertains to the field of communication technologies. The privacy protection information processing method of embodiments of this application includes: sending, by a first communication device, a privacy protection service request message to a second communication device, where the privacy protection service request message includes an identifier of the first communication device and privacy protection service description information; and receiving, by the first communication device, privacy-protected service data returned by the second communication device.

## Description

### CROSS-REFERENCE TO RELATED APPLICATIONS

This application claims priority to Chinese Patent Application No.202210494961.7, filed in China on May 07, 2022, which is incorporated herein by reference in its entirety.

### TECHNICAL FIELD

This application pertains to the field of communication technologies and specifically relates to a privacy protection information processing method and apparatus, and a communication device.

### BACKGROUND

A large amount of data is stored in mobile communication systems, and these data can provide assistance for third-party applications. However, existing mobile communication networks can exchange information with third-party applications only through a network exposure function (Network Exposure Function, NEF), resulting in limited information exchange and inadequate data privacy protection.

### SUMMARY

Embodiments of this application provide a privacy protection information processing method and apparatus, and a communication device, which can implement data exchange between a third-party network element and a core-network network element and can also protect data privacy in a network.

According to a first aspect, a privacy protection information processing method is provided, including:
sending, by a first communication device, a privacy protection service request message to a second communication device, where the privacy protection service request message includes an identifier of the first communication device and privacy protection service description information; and
receiving, by the first communication device, privacy-protected service data returned by the second communication device.

According to a second aspect, a privacy protection information processing apparatus is provided, including:
a first sending module, configured to send a privacy protection service request message to a second communication device, where the privacy protection service request message includes an identifier of a first communication device and privacy protection service description information; and
a first receiving module, configured to receive privacy-protected service data returned by the second communication device.

According to a third aspect, a privacy protection information processing method is provided, including:
receiving, by a second communication device, a privacy protection service request message sent by a first communication device, where the privacy protection service request message includes an identifier of the first communication device and privacy protection service description information;
after verifying that the first communication device is authorized to acquire a privacy protection service, sending, by the second communication device, the privacy protection service request message to a third communication device;
receiving, by the second communication device, privacy-protected service data sent by the third communication device; and
sending, by the second communication device, the privacy-protected service data to the first communication device.

According to a fourth aspect, a privacy protection information processing apparatus is provided, including:
a second receiving module, configured to receive a privacy protection service request message sent by a first communication device, where the privacy protection service request message includes an identifier of the first communication device and privacy protection service description information;
a second sending module, configured to send the privacy protection service request message to a third communication device after verifying that the first communication device is authorized to acquire a privacy protection service;
the second receiving module is further configured to receive privacy-protected service data sent by the third communication device; and
the second sending module is further configured to send the privacy-protected service data to the first communication device.

According to a fifth aspect, a privacy protection information processing method is provided, including:
receiving, by a third communication device, a privacy protection service request message sent by a second communication device, where the privacy protection service request message includes an identifier of a first communication device and privacy protection service description information;
parsing, by the third communication device, the privacy protection service request message, collecting service data of a privacy protection service based on the privacy protection service description information, and performing privacy protection for the service data based on a parsing result; and
sending, by the third communication device, the privacy-protected service data to the second communication device.

According to a sixth aspect, a privacy protection information processing apparatus is provided, including:
a third receiving module, configured to receive a privacy protection service request message sent by a second communication device, where the privacy protection service request message includes an identifier of a first communication device and privacy protection service description information;
a processing module, configured to parse the privacy protection service request message, collect service data of the privacy protection service based on the privacy protection service description information, and perform privacy protection for the service data based on a parsing result; and
a third sending module, configured to send the privacy-protected service data to the second communication device.

According to a seventh aspect, a communication device is provided. The communication device includes a processor and a memory. The memory stores a program or instructions capable of running on the processor. When the program or instructions are executed by the processor, the steps of the method according to the first, third, or fifth aspect are implemented.

According to an eighth aspect, a communication system is provided, including a first communication device, a second communication device, and a third communication device. The first communication device may be configured to implement the steps of the privacy protection information processing method according to the first aspect, the second communication device may be configured to implement the steps of the privacy protection information processing method according to the third aspect, and the third communication device may be configured to implement the steps of the privacy protection information processing method according to the fifth aspect.

According to a ninth aspect, a readable storage medium is provided. The readable storage medium stores a program or instructions, and when the program or instructions are executed by a processor, the steps of the method according to the first aspect are implemented, or the steps of the method according to the third aspect are implemented, or the steps of the method according to the fifth aspect are implemented.

According to a tenth aspect, a chip is provided. The chip includes a processor and a communication interface, where the communication interface is coupled to the processor, and the processor is configured to run a program or instructions to implement the method according to the first aspect, or implement the method according to the third aspect, or implement the method according to the fifth aspect.

According to an eleventh aspect, a computer program/program product is provided. The computer program/program product is stored in a storage medium, and the computer program/program product is executed by at least one processor to implement the privacy protection information processing method according to the first aspect, or implement the steps of the privacy protection information processing method according to the third aspect, or implement the steps of the privacy protection information processing method according to the fifth aspect.

In the embodiments of this application, the first communication device proposes a privacy protection service request to the third communication device through the second communication device. After performing privacy protection for the service data, the third communication device provides the service data to the first communication device through the second communication device. The first communication device fails to acquire original service data, but the privacy-protected service data can meet the requirements of the first communication device. Thus, a large amount of useful information is exchanged between the first communication device and the third communication device, and data privacy in a network can be protected.

### BRIEF DESCRIPTION OF DRAWINGS

FIG. 1 is a block diagram of a wireless communication system to which the embodiments of this application are applicable;
FIG. 2 is a schematic flowchart of a privacy protection information processing method on a first communication device side according to an embodiment of this application;
FIG. 3 is a schematic flowchart of a privacy protection information processing method on a second communication device side according to an embodiment of this application;
FIG. 4 is a schematic flowchart of a privacy protection information processing method on a third communication device side according to an embodiment of this application;
FIG. 5 and FIG. 6 are schematic flowcharts of a privacy protection information processing method according to an embodiment of this application;
FIG. 7 is a schematic structural diagram of a privacy protection information processing apparatus on a first communication device side according to an embodiment of this application;
FIG. 8 is a schematic structural diagram of a privacy protection information processing apparatus on a second communication device side according to an embodiment of this application;
FIG. 9 is a schematic structural diagram of a privacy protection information processing apparatus on a third communication device side according to an embodiment of this application; and
FIG. 10 is a schematic structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of the objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

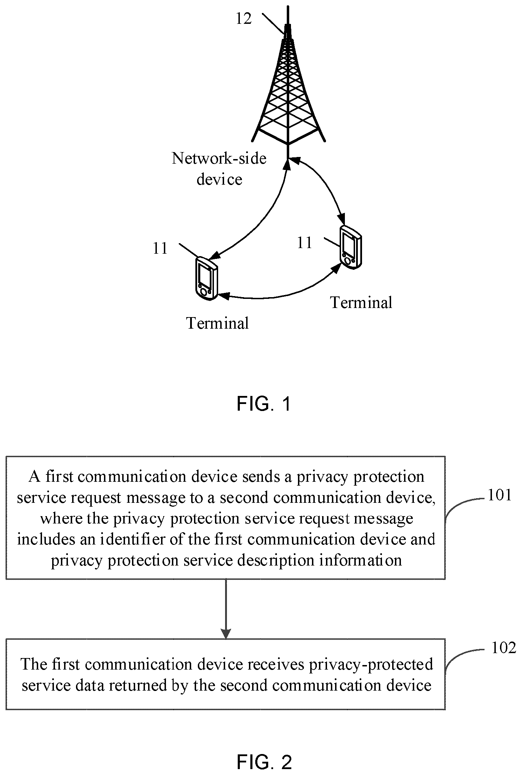

FIG. 1 is a block diagram of a wireless communication system to which the embodiments of this application are applicable. The wireless communication system includes a terminal 11 and a network-side device 12. The terminal 11 may be a terminal-side device, for example, a mobile phone, a tablet personal computer (Tablet Personal Computer), a laptop computer (Laptop Computer) or called as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device, WD), a vehicle user equipment (Vehicle User Equipment, VUE), a pedestrian user equipment (Pedestrian User Equipment, PUE), a smart home device (wireless communication-enabled home devices such as refrigerators, televisions, washing machines, or furniture), a gaming console, a personal computer (Personal Computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, and the like), a smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point (Access Point, AP), a Wi-Fi (Wireless Fidelity, WiFi) node, or the like. The base station can be referred to as Node B (Node B, NB), evolved Node B (Evolved Node B, eNB), access point, base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

In an optional embodiment of this application, the communication device may include at least one of the following: a communication network element and a terminal.

In an embodiment of this application, the communication network element may include at least one of the following: a core-network network element and a radio-access-network network element.

In this embodiment of this application, the core-network network element (CN network element) may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like.

In this embodiment of this application, the RNA network element may include but is not limited to at least one of the following: a radio access network device, a radio access network node, a radio access network function, a radio access network unit, a 3rd Generation partnership project (3rd Generation Partnership Project, 3GPP) radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a base station (NodeB), a non-3GPP inter working function (Non-3GPP Inter Working Function, N3IWF), an access controller (Access Controller, AC) node, an access point (Access Point, AP) device, a wireless local area network (Wireless Local Area Networks, WLAN) node, or an N3IWF.

A base station may be a base transceiver station (BTS, Base Transceiver Station) in GSM or CDMA, or may be a base station (NodeB) in WCDMA, or may be an evolved Node B (eNB or e-NodeB, evolutional Node B) in LTE or a 5G base station (gNB), which is not limited in the embodiments of this application.

In an optional embodiment of this application, UE may include one of the following: a terminal device, a terminal and card unit, and a card.

In an optional embodiment of this application, the card may include one of the following: a subscriber identity module (Subscriber Identity Module, SIM) card, a universal subscriber identity module (Universal Subscriber Identity Module, USIM) card, and an embedded-SIM (Embedded-SIM, eSIM) card.

In an optional embodiment of this application, the terminal may include a relay supporting terminal functions and/or a terminal supporting relay functions. The terminal may also be referred to as a terminal device or user equipment (User Equipment, UE). The terminal may be a terminal-side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

In the embodiments of this application, a NEF is a network element in 3GPP and exchanges information with a third party authorized by 3GPP through a specific interface. A fifth generation mobile communication system (5G system) includes the following specific exposure capabilities.

Monitoring capability: It is used for monitoring specific events of UE in the 5G system and exposing information of these monitoring events externally through the NEF. The monitoring events mainly include UE location, accessibility, roaming state, connection state, and the like.

Security reporting capability: It includes services such as identity authentication, authorization control and network defense, or network security capability configuration and adjustment realized by managing authorized slices by a third-party application.

In the related art, a 3GPP network can exchange information with a third party only through the NEF. Inadequate information exchange between the 3GPP and the third party leads to a failure of effective exchange of a large amount of useful information, thus causing a failure in embodying the value of the data. In addition, if a large amount of information is exchanged, data privacy in the network cannot be protected.

An embodiment of this application provides a privacy protection information processing method, as shown in FIG. 2, including the following steps.

Step 101: A first communication device sends a privacy protection service request message to a second communication device, where the privacy protection service request message includes an identifier of the first communication device and privacy protection service description information.

Step 102: The first communication device receives privacy-protected service data returned by the second communication device.

In this embodiment of this application, the first communication device proposes a privacy protection service request through the second communication device, and the second communication device provides the privacy-protected service data to the first communication device. The first communication device fails to acquire original service data, but the privacy-protected service data can meet the requirements of the first communication device. Thus, a large amount of useful information can be forwarded through the second communication device and exchanged between the first communication device and the third communication device, and the data privacy in the network can be protected.

In some embodiments, the method further includes:
receiving, by the first communication device, a pre-configured set of privacy protection service description information from the second communication device, where the pre-configured set of privacy protection service description information is sent by a third communication device to the second communication device;
selecting and storing, by the first communication device, target privacy protection service description information, where the target privacy protection service description information is at least one piece of privacy protection service description information in the set of privacy protection service description information, and the target privacy protection service description information is privacy protection service description information supported and/or required by the first communication device; and
sending, by the first communication device, the target privacy protection service description information to the second communication device.

In some embodiments, the privacy protection service description information includes at least one of the following:
a privacy protection service identifier list for indicating a type of a privacy protection service to be requested, where an identifier of the privacy protection service may be "beam management optimization", "user location recommendation", "UE fitness probability estimation", or the like;
a privacy protection level, which may be level 0, level 1, level 2, or the like, where level 0 may be higher than level 1, and level 1 may be higher than level 2; alternatively, level 2 may be higher than level 1, and level 1 may be higher than level 0; the privacy protection levels are different in strength and exposed content; and a higher privacy protection level results in fewer exposed original data characteristics and higher processing complexity; and a higher privacy protection level means that it is more difficult for the first communication device to infer original service data from the privacy-protected service data;
a model training indication, indicating whether the service data of the privacy protection service requires model training to obtain privacy protection, where 1 bit may be used for indication, for example, a value of the model training indication being 0 indicates that model training is not required, and the value of the model training indication being 1 indicates that model training is required; alternatively, the value of the model training indication being 1 indicates that model training is not required, and the value of the model training indication being 0 indicates that model training is required; and
a data request indication, indicating data requirements of the service data.

In a specific example, the third communication device supports privacy protection levels level 1, level 2, level 3, and level 4, from which a first communication device 1 selects privacy protection levels level 1 and level 2, and a first communication device 2 selects privacy protection levels level 3 and level 2. The privacy protection levels selected by the first communication device are used for requesting corresponding privacy protection services. The second communication device stores association information of the identifier of the first communication device and the privacy protection level selected by the first communication device for authentication. The third communication device receives and stores the association information, and provides corresponding privacy protection services to different first communication devices with reference to the association information.

In some embodiments, the data request indication includes at least one of the following:
sample type, for indicating a sample type of the service data, for example, location data and motion data;
sample quantity, for indicating a sample quantity of the service data, for example, 500 and 1000;
sample validity period, for indicating a validity time of the service data, for example, collecting data from 8:00 to 10:00 every day;
sample range, for indicating a validity range of the service data; and
sample collection method, for indicating a method for collecting the service data, for example, indicating sample sources for obtaining the service data.

In some embodiments, when the model training indication indicates that the service data requires model training, the privacy protection service description information further includes at least one of the following:
model training filter information, including at least one of the following: model algorithm type information (analytics ID) or identifier information (model ID), model algorithm configuration information, model performance, and model data requirements; and
a joint training indication, indicating whether the service data requires the first communication device and the third communication device to jointly perform model training.

The model training filter information is used for specifying a basic model to be used; the model algorithm type information or identifier information is used for indicating which algorithm the third communication device uses for model training, including but not limited to heterogeneous neural networks and decision trees. The model algorithm configuration information is matched with and bound to the algorithm type information or identifier information, for indicating parameters required when a third communication entity uses a specified algorithm for model training, for example, a role (active party or passive party) and a split (split) point. The model performance includes but is not limited to convergence condition, iteration performance, and model accuracy evaluation. The model data requirements include but are not limited to sample type, sample quantity, sample validity period, sample range, and sample collection method.

In this embodiment, the first communication device is a third-party network element authorized by 3GPP, and may specifically be an AF. The third communication device is a core-network network element in 3GPP that has certain analysis, computing and artificial intelligence (Artificial Intelligence, AI) training capabilities, and may be an existing network element or a newly added network element in 3GPP for privacy protection of data in 3GPP. The second communication device refers to a network element in 3GPP that has a function of exchanging information with a third party and an authorization function, and may be an existing network element or a newly added network element in 3GPP, specifically, it may be a network element NEF. The core-network network element in this embodiment includes an AMF, an SMF, a PCF, and the like.

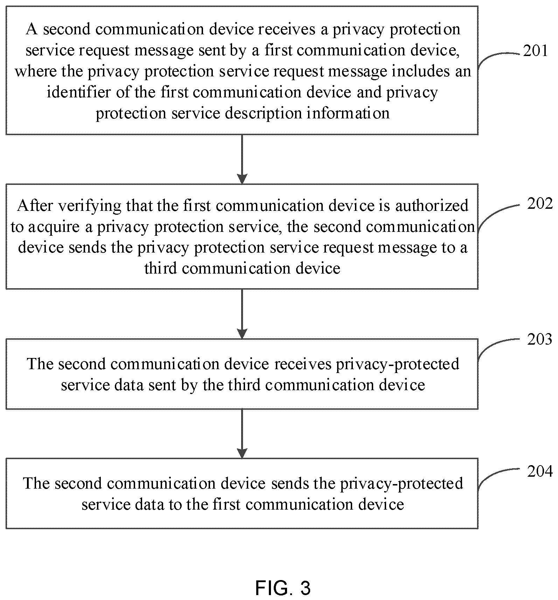

An embodiment of this application provides a privacy protection information processing method, as shown in FIG. 3, including the following steps.

Step 201: A second communication device receives a privacy protection service request message sent by a first communication device, where the privacy protection service request message includes an identifier of the first communication device and privacy protection service description information.

Step 202: After verifying that the first communication device is authorized to acquire a privacy protection service, the second communication device sends the privacy protection service request message to a third communication device.

Step 203: The second communication device receives privacy-protected service data sent by the third communication device.

Step 204: The second communication device sends the privacy-protected service data to the first communication device.

In this embodiment of this application, after verifying that the first communication device is authorized to acquire a privacy protection service, the second communication device sends the privacy protection service request message to the third communication device and sends the privacy-protected service data returned by the third communication device to the first communication device. In this way, a large amount of useful information can be exchanged between the first communication device and the third communication device, and the data privacy in the network can be protected.

In some embodiments, the method further includes:
receiving, by the second communication device, a pre-configured set of privacy protection service description information sent by the third communication device;
sending, by the second communication device, the pre-configured set of privacy protection service description information to the first communication device;
receiving, by the second communication device, target privacy protection service description information sent by the first communication device, where the target privacy protection service description information is at least one piece of privacy protection service description information in the set of privacy protection service description information, and the target privacy protection service description information is privacy protection service description information supported and/or required by the first communication device;
storing, by the second communication device, the target privacy protection service description information, and associating the target privacy protection service description information with the identifier of the first communication device; and
sending, by the second communication device, association information of the target privacy protection service description information and the identifier of the first communication device to the third communication device.

In this embodiment, the privacy protection service is pre-configured through the foregoing steps.

In some embodiments, the privacy protection service description information includes at least one of the following:
a privacy protection service identifier list for indicating a type of a privacy protection service to be requested, where an identifier of the privacy protection service may be "beam management optimization", "user location recommendation", "UE fitness probability estimation", or the like;
a privacy protection level, which may be level 0, level 1, level 2, or the like, where level 0 may be higher than level 1, and level 1 may be higher than level 2; alternatively, level 2 may be higher than level 1, and level 1 may be higher than level 0; the privacy protection levels are different in strength and exposed content; and a higher privacy protection level results in fewer exposed original data characteristics and higher processing complexity; and a higher privacy protection level means that it is more difficult for the first communication device to infer original service data from the privacy-protected service data;
a model training indication, indicating whether the service data of the privacy protection service requires model training to obtain privacy protection, where 1 bit may be used for indication, for example, a value of the model training indication being 0 indicates that model training is not required, and the value of the model training indication being 1 indicates that model training is required; alternatively, the value of the model training indication being 1 indicates that model training is not required, and the value of the model training indication being 0 indicates that model training is required; and
a data request indication, indicating data requirements of the service data.

In a specific example, the third communication device supports privacy protection levels level 1, level 2, level 3, and level 4, from which a first communication device 1 selects privacy protection levels level 1 and level 2, and a first communication device 2 selects privacy protection levels level 3 and level 2. The privacy protection levels selected by the first communication device are used for requesting corresponding privacy protection services. The second communication device stores association information of the identifier of the first communication device and the privacy protection level selected by the first communication device for authentication. The third communication device receives and stores the association information, and provides corresponding privacy protection services to different first communication devices with reference to the association information.

In some embodiments, before the sending the privacy protection service request message to the third communication device, the method further includes:
verifying, by the second communication device, the privacy protection service request message based on previously-stored privacy protection service description information, and determining that the first communication device is authorized to acquire a privacy protection service. During verification, if the target privacy protection service description information associated with the identifier of the first communication device includes the privacy protection service description information in the privacy protection service request message, it is determined that the first communication device is authorized to acquire a privacy protection service.

In some embodiments, the data request indication includes at least one of the following:
sample type, for indicating a sample type of the service data, for example, location data and motion data;
sample quantity, for indicating a sample quantity of the service data, for example, 500 and 1000;
sample validity period, for indicating a validity time of the service data, for example, collecting data from 8:00 to 10:00 every day;
sample range, for indicating a validity range of the service data; and
sample collection method, for indicating a method for collecting the service data, for example, indicating sample sources for obtaining the service data.

In some embodiments, when the model training indication indicates that the service data requires model training, the privacy protection service description information further includes at least one of the following:
model training filter information, including at least one of the following: model algorithm type information (analytics ID) or identifier information (model ID), model algorithm configuration information, model performance, and model data requirements; and
a joint training indication, indicating whether the service data requires the first communication device and the third communication device to jointly perform model training.

The model training filter information is used for specifying a basic model to be used; the model algorithm type information or identifier information is used for indicating which algorithm the third communication device uses for model training, including but not limited to heterogeneous neural networks and decision trees. The model algorithm configuration information is matched with and bound to the algorithm type information or identifier information, for indicating parameters required when a third communication entity uses a specified algorithm for model training, for example, a role (active party or passive party) and a split point. The model performance includes but is not limited to convergence condition, iteration performance, and model accuracy evaluation. The model data requirements include but are not limited to sample type, sample quantity, sample validity period, sample range, and sample collection method.

In this embodiment, the first communication device is a third-party network element authorized by 3GPP, and may specifically be an AF. The third communication device is a core-network network element in 3GPP that has certain analysis, computing and Al training capabilities, and may be an existing network element or a newly added network element in 3GPP for privacy protection of data in 3GPP. The second communication device refers to a network element in 3GPP that has a function of exchanging information with a third party and an authorization function, and may be an existing network element or a newly added network element in 3GPP, specifically, it may be a network element NEF. The core-network network element in this embodiment includes an AMF, an SMF, a PCF, and the like.

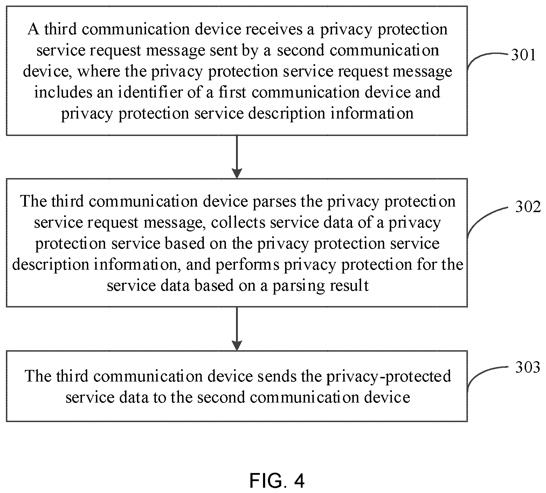

An embodiment of this application provides a privacy protection information processing method, as shown in FIG. 4, including the following steps.

Step 301: A third communication device receives a privacy protection service request message sent by a second communication device, where the privacy protection service request message includes an identifier of the first communication device and privacy protection service description information.

Step 302: The third communication device parses the privacy protection service request message, collects service data of the privacy protection service based on the privacy protection service description information, and performs privacy protection for the service data based on a parsing result.

Step 303: The third communication device sends the privacy-protected service data to the second communication device.

In this embodiment, after receiving the privacy protection service request message forwarded by the second communication device, the third communication device collects the service data of the privacy protection service and sends the privacy-protected service data to the second communication device. In this way, a large amount of useful information can be exchanged between the first communication device and the third communication device, and the data privacy in the network can be protected.

In some embodiments, it is necessary to pre-configure the privacy protection service, and the method further includes:
sending, by the third communication device, a pre-configured set of privacy protection service description information to the second communication device; and
receiving, by the third communication device, association information of target privacy protection service description information and the identifier of the first communication device, where the association information is sent by the second communication device.

In some embodiments, the privacy protection service description information includes at least one of the following:
a privacy protection service identifier list for indicating a type of a privacy protection service to be requested, where an identifier of the privacy protection service may be "beam management optimization", "user location recommendation", "UE fitness probability estimation", or the like;
a privacy protection level, which may be level 0, level 1, level 2, or the like, where level 0 may be higher than level 1, and level 1 may be higher than level 2; alternatively, level 2 may be higher than level 1, and level 1 may be higher than level 0; the privacy protection levels are different in strength and exposed content; and a higher privacy protection level results in fewer exposed original data characteristics and higher processing complexity; and a higher privacy protection level means that it is more difficult for the first communication device to infer original service data from the privacy-protected service data;
a model training indication, indicating whether the service data of the privacy protection service requires model training to obtain privacy protection, where 1 bit may be used for indication, for example, a value of the model training indication being 0 indicates that model training is not required, and the value of the model training indication being 1 indicates that model training is required; alternatively, the value of the model training indication being 1 indicates that model training is not required, and the value of the model training indication being 0 indicates that model training is required; and
a data request indication, indicating data requirements of the service data.

In a specific example, the third communication device supports privacy protection levels level 1, level 2, level 3, and level 4, from which a first communication device 1 selects privacy protection levels level 1 and level 2, and a first communication device 2 selects privacy protection levels level 3 and level 2. The privacy protection levels selected by the first communication device are used for requesting corresponding privacy protection services. The second communication device stores association information of the identifier of the first communication device and the privacy protection level selected by the first communication device for authentication. The third communication device receives and stores the association information, and provides corresponding privacy protection services to different first communication devices with reference to the association information.

In some embodiments, the data request indication includes at least one of the following:
sample type, for indicating a sample type of the service data, for example, location data and motion data;
sample quantity, for indicating a sample quantity of the service data, for example, 500 and 1000;
sample validity period, for indicating a validity time of the service data, for example, collecting data from 8:00 to 10:00 every day;
sample range, for indicating a validity range of the service data; and
sample collection method, for indicating a method for collecting the service data, for example, indicating sample sources for obtaining the service data.

In some embodiments, when the model training indication indicates that the service data requires model training, the privacy protection service description information further includes at least one of the following:
model training filter information, including at least one of the following: model algorithm type information (analytics ID) or identifier information (model ID), model algorithm configuration information, model performance, and model data requirements; and
a joint training indication, indicating whether the service data requires the first communication device and the third communication device to jointly perform model training.

The model training filter information is used for specifying a basic model to be used; the model algorithm type information or identifier information is used for indicating which algorithm the third communication device uses for model training, including but not limited to heterogeneous neural networks and decision trees. The model algorithm configuration information is matched with and bound to the algorithm type information or identifier information, for indicating parameters required when a third communication entity uses a specified algorithm for model training, for example, a role (active party or passive party) and a split point. The model performance includes but is not limited to convergence condition, iteration performance, and model accuracy evaluation. The model data requirements include but are not limited to sample type, sample quantity, sample validity period, sample range, and sample collection method.

In this embodiment, the first communication device is a third-party network element authorized by 3GPP, and may specifically be an AF. The third communication device is a core-network network element in 3GPP that has certain analysis, computing and Al training capabilities, and may be an existing network element or a newly added network element in 3GPP for privacy protection of data in 3GPP. The second communication device refers to a network element in 3GPP that has a function of exchanging information with a third party and an authorization function, and may be an existing network element or a newly added network element in 3GPP, specifically, it may be a network element NEF. The core-network network element in this embodiment includes an AMF, an SMF, a PCF, and the like.

In some embodiments, the parsing result includes at least one of the following:
a privacy protection level corresponding to the service data, where the third communication device performs privacy protection for the service data based on the determined privacy protection level corresponding to the service data; and
whether model training is performed on the service data.

The privacy protection level corresponding to the service data adopts any one of the following:
a first privacy protection level requested by the first communication device;
a minimum privacy protection level supported by the third communication device; and
a privacy protection level selected by the third communication device from a set of privacy protection level, where the set of privacy protection level includes the first privacy protection level and a privacy protection level supported by the service data, the privacy protection level determines a scrambling algorithm for the third communication device to perform privacy protection for the service data, and a higher privacy protection level results in more iterations of the scrambling algorithm.

In this embodiment of this application, a 3GPP network provides a service required by a third-party network element (the first communication device) through privacy processing. To be specific, the third-party network element makes a request from the 3GPP network and exposes the request to a network entity (the third communication device) through a 3GPP information exposure network element (the second communication device), and the network entity calculates internal information of 3GPP by using a privacy processing method and then exposes the information to the third-party network element. In this process, the third-party network element cannot acquire the original data in 3GPP but can meet its own requirements by using a calculation result thereof.

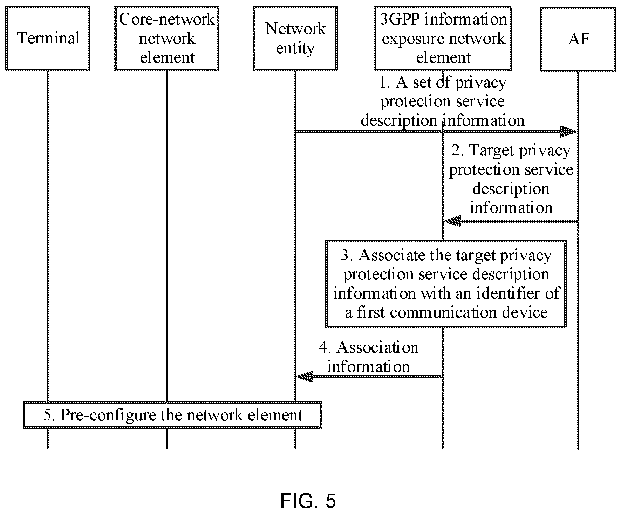

In a specific embodiment, as shown in FIG. 5, in an example in which the first communication device is an AF and the second communication device is a 3GPP information exposure network element, before the privacy protection service is used, the 3GPP provides supported privacy protection services, from which the AF selects a required service. Both the 3GPP and the AF need to pre-configure the privacy protection services, including the following steps.

Step 1. The network entity provides a supported set of privacy protection service description information, where different privacy protection services correspond to different privacy protection service IDs and privacy protection service description information.

Specifically, different privacy protection services correspond to different privacy processing methods, and require different input parameters and output parameters. The privacy protection service description information includes at least one of the following:
a privacy protection service identifier list for indicating a type of a privacy protection service to be requested, where an identifier of the privacy protection service may be "beam management optimization", "user location recommendation", "UE fitness probability estimation", or the like;
a privacy protection level, which may be level 0, level 1, level 2, or the like, where level 0 may be higher than level 1, and level 1 may be higher than level 2; alternatively, level 2 may be higher than level 1, and level 1 may be higher than level 0; the privacy protection levels are different in strength and exposed content; and a higher privacy protection level results in fewer exposed original data characteristics and higher processing complexity; and a higher privacy protection level means that it is more difficult for the first communication device to infer original service data from the privacy-protected service data;
a model training indication, indicating whether the service data of the privacy protection service requires model training to obtain privacy protection, where 1 bit may be used for indication, for example, a value of the model training indication being 0 indicates that model training is not required, and the value of the model training indication being 1 indicates that model training is required; alternatively, the value of the model training indication being 1 indicates that model training is not required, and the value of the model training indication being 0 indicates that model training is required; and
a data request indication, indicating data requirements of the service data.

When the model training indication indicates that the service data requires model training, the privacy protection service description information further includes at least one of the following:
model training filter information, including at least one of the following: model algorithm type information (analytics ID) or identifier information (model ID), model algorithm configuration information, model performance, and model data requirements; and
a joint training indication, indicating whether the service data requires the first communication device and the third communication device to jointly perform model training.

The model training filter information is used for specifying a basic model to be used; the model algorithm type information or identifier information is used for indicating which algorithm the third communication device uses for model training, including but not limited to heterogeneous neural networks and decision trees. The model algorithm configuration information is matched with and bound to the algorithm type information or identifier information, for indicating parameters required when a third communication entity uses a specified algorithm for model training, for example, a role (active party or passive party) and a split point. The model performance includes but is not limited to convergence condition, iteration performance, and model accuracy evaluation. The model data requirements include but are not limited to sample type, sample quantity, sample validity period, sample range, and sample collection method.

Step 2. The AF selects target privacy protection service description information from a set of privacy protection service description information and stores the target privacy protection service description information, for providing corresponding parameters when requesting a privacy protection service request later.

Further, the AF can select a required privacy service from the received set of privacy service description information and reports its ID and an AF identifier (such as AF ID) to a NEF.

Step 3. The NEF associates an AF-supported privacy service ID and the AF ID and stores them, for determining whether the AF can request a corresponding privacy protection service later.

Step 4. The NEF reports the association information to the network entity, and the network entity stores the association information.

Step 5. The network entity pre-configures an internal network element of the 3GPP.

Afterwards, when the privacy protection service supported by the 3GPP network changes, the 3GPP network triggers a privacy service description reconfiguration process; or when privacy protection service requirements of the AF change, the AF triggers the 3GPP network to reconfigure the privacy service, and the foregoing steps 1 to 5 are repeated.

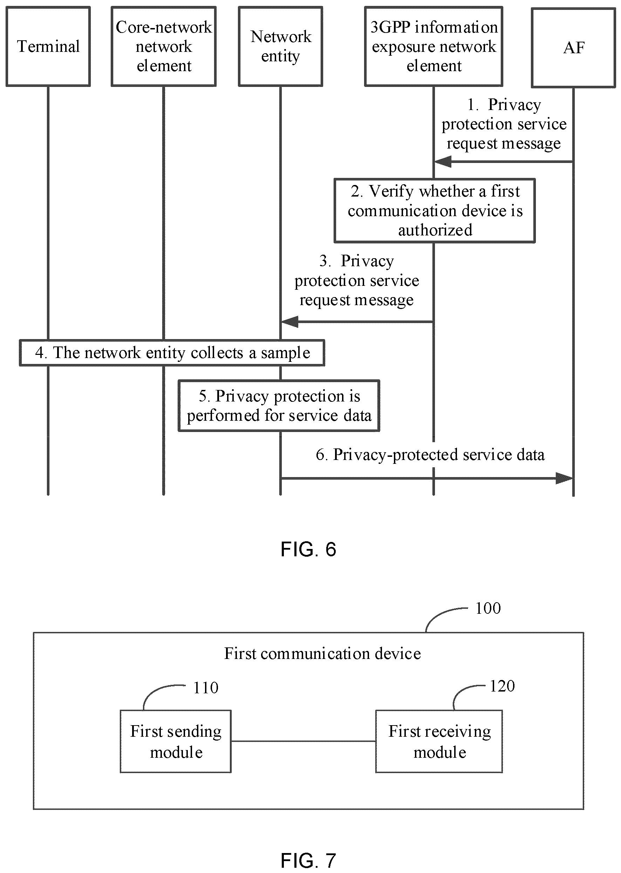

In a specific embodiment, as shown in FIG. 6, in an example in which the first communication device is an AF and the second communication device is a 3GPP information exposure network element, the AF sends a data request indication, the network entity scrambles the service data based on a privacy protection level and then feeds the service data back to the AF, and the AF finishes a task as required by using the data, including the following steps.

Step 1. The AF expects to execute a task by using the data in the 3GPP and sends a privacy protection service request message to the 3GPP information exposure network element, where the privacy protection service request message includes:
an AF identifier (such as AF ID), used by the NEF for determining whether the current AF is authorized to acquire a privacy protection service;
a privacy protection service ID, used for indicating a type of a privacy protection service to be requested, for example, the privacy protection service ID="privacy data request";
a data request indication, including at least one of the following:
   sample type;
   sample quantity;
   sample validity period;
   sample range; and
   sample collection method; and
   a privacy protection level, used for indicating a privacy protection level to be requested, for example, privacy protection level="level 1", where
   the foregoing information may be included in some information in a container (container).

Step 2. The NEF verifies the privacy protection service requested by the AF based on the previously-stored association information of the privacy protection service ID and the AF ID, and determines whether the AF is authorized to acquire the privacy protection service. For example, if the AF ID is associated with the requested privacy protection service ID, it is determined that the AF is authorized to acquire the privacy protection service; and if the AF ID is not associated with the requested privacy protection service ID, it is determined that the AF is not authorized to acquire the privacy protection service.

Step 3. After it is determined that the AF is authorized to acquire the privacy protection service, the NEF transparently forwards the privacy protection service request message of the AF.

Step 4. The network entity parses the privacy protection service request message of the AF and performs the following operations:
determining whether model training is required; if model training is required, performing model training on the collected service data; and if model training is not required, skipping the model training on the collected service data, where parameters for the model training are determined based on the model training filter information and/or joint training indication; and
performing a sample collection process based on the data request indication, which includes processes that the network entity issues a sample collection request to each sample source, each sample source collects the service data and reports the collected service data to the network entity, and the like; where the service data may be original data collected by a sample source or a result obtained after processing of the sample source.

Step 5. The network entity selects a corresponding privacy protection processing method according to the privacy protection level and processes the collected service data.

The privacy protection level is any one of the following:
a privacy protection level requested by the AF;
the best-matched privacy protection level selected by the network entity from a supported set of privacy protection level according to the privacy protection level requested by the AF and the collected service data; and
the most basic privacy protection level supported by the network entity.

The privacy protection processing method is a scrambling algorithm determined by the network entity according to the privacy protection level. The principle is that a higher privacy protection level results in a larger processing difficulty of the scrambling algorithm (including more iterations and longer computation time) and means that it is more difficult for the AF to acquire the original data characteristics from the privacy-protected data.

Step 6. The network entity sends the privacy-protected service data to the AF through the NEF.

In this embodiment, if the core-network network element has the analysis, computation, and Al training capabilities, the network entity may be integrated with the core-network network element; in addition, the privacy-protected service data may be existing internal 3GPP data which the NEF can expose to a third party, or newly added internal 3GPP data.

The privacy protection information processing method provided by the embodiments of this application may be executed by a privacy protection information processing apparatus. In the embodiments of this application, the privacy protection information processing method being executed by a privacy protection information processing apparatus is used as an example to describe the privacy protection information processing apparatus provided in the embodiments of this application.

An embodiment of this application provides a privacy protection information processing apparatus, as shown in FIG. 7, applied to a first communication device 100 and including:
a first sending module 110, configured to send a privacy protection service request message to a second communication device, where the privacy protection service request message includes an identifier of the first communication device and privacy protection service description information; and
a first receiving module 120, configured to receive privacy-protected service data returned by the second communication device.

In some embodiments, the first receiving module 120 is configured to receive a pre-configured set of privacy protection service description information from the second communication device, where the pre-configured set of privacy protection service description information is sent by a third communication device to the second communication device; and
the first sending module 110 is configured to select and store target privacy protection service description information and send the target privacy protection service description information to the second communication device, where the target privacy protection service description information is at least one piece of privacy protection service description information in the set of privacy protection service description information.

In some embodiments, the privacy protection service description information includes at least one of the following:
a privacy protection service identifier list;
a privacy protection level, where a higher privacy protection level means that it is more difficult for the first communication device to infer original service data from the privacy-protected service data;
a model training indication, indicating whether the service data requires model training; and
a data request indication, indicating data requirements of the service data.

In some embodiments, the data request indication includes at least one of the following:
sample type;
sample quantity;
sample validity period;
sample range; and
sample collection method.

In some embodiments, when the model training indication indicates that the service data requires model training, the privacy protection service description information further includes at least one of the following:
model training filter information, including at least one of the following: model algorithm type information or identifier information, model algorithm configuration information, model performance, and model data requirements; and
a joint training indication, indicating whether the service data requires the first communication device and the third communication device to jointly perform model training.

In some embodiments, the first communication device is a third-party network element, the second communication device is a network exposure function network element, and the third communication device is a core-network network element.

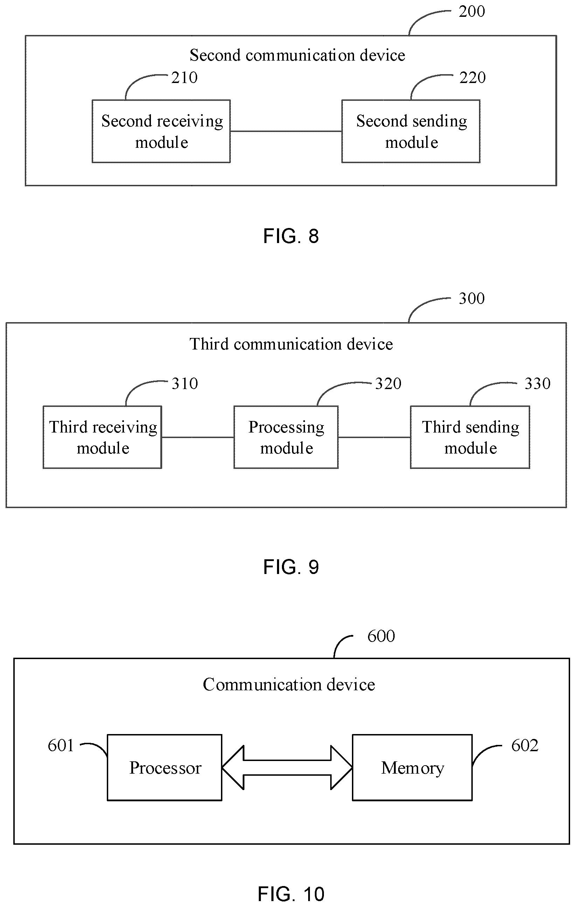

An embodiment of this application provides a privacy protection information processing apparatus, as shown in FIG. 8, applied to a second communication device 200 and including:
a second receiving module 210, configured to receive a privacy protection service request message sent by a first communication device, where the privacy protection service request message includes an identifier of the first communication device and privacy protection service description information; and
a second sending module 220, configured to send the privacy protection service request message to a third communication device after verifying that the first communication device is authorized to acquire a privacy protection service.

The second receiving module 210 is further configured to receive privacy-protected service data sent by the third communication device; and
the second sending module 220 is further configured to send the privacy-protected service data to the first communication device.

In some embodiments, the second sending module 220 is further configured to verify the privacy protection service request message based on previously-stored privacy protection service description information, and determine that the first communication device is authorized to acquire a privacy protection service.

In some embodiments, the second receiving module 210 is further configured to receive a pre-configured set of privacy protection service description information sent by the third communication device;
the second sending module 220 is further configured to send the pre-configured set of privacy protection service description information to the first communication device;
the second receiving module 210 is further configured to receive target privacy protection service description information sent by the first communication device, where the target privacy protection service description information is at least one piece of privacy protection service description information in the set of privacy protection service description information; and
the second sending module 220 is further configured to store the target privacy protection service description information, associate the target privacy protection service description information with the identifier of the first communication device, and send association information of the target privacy protection service description information and the identifier of the first communication device to the third communication device.

In some embodiments, the privacy protection service description information includes at least one of the following:
a privacy protection service identifier list;
a privacy protection level, where a higher privacy protection level means that it is more difficult for the first communication device to infer original service data from the privacy-protected service data;
a model training indication, indicating whether the service data requires model training; and
a data request indication, indicating data requirements of the service data.

In some embodiments, if the target privacy protection service description information associated with the identifier of the first communication device includes the privacy protection service description information in the privacy protection service request message, it is determined that the first communication device is authorized to acquire a privacy protection service.

In some embodiments, the data request indication includes at least one of the following:
sample type;
sample quantity;
sample validity period;
sample range; and
sample collection method.

In some embodiments, when the model training indication indicates that the service data requires model training, the privacy protection service description information further includes at least one of the following:
model training filter information, including at least one of the following: model algorithm type information or identifier information, model algorithm configuration information, model performance, and model data requirements; and
a joint training indication, indicating whether the service data requires the first communication device and the third communication device to jointly perform model training.

In some embodiments, the first communication device is a third-party network element, the second communication device is a network exposure function network element, and the third communication device is a core-network network element.

An embodiment of this application provides a privacy protection information processing apparatus, as shown in FIG. 9, applied to a second communication device 300 and including:
a third receiving module 310, configured to receive a privacy protection service request message sent by the second communication device, where the privacy protection service request message includes an identifier of a first communication device and privacy protection service description information;
a processing module 320, configured to parse the privacy protection service request message, collect service data of the privacy protection service based on the privacy protection service description information, and perform privacy protection for the service data based on a parsing result; and
a third sending module 330, configured to send the privacy-protected service data to the second communication device.

In some embodiments, the third sending module 330 is further configured to send a pre-configured set of privacy protection service description information to the second communication device; and
the third receiving module 310 is further configured to receive association information of target privacy protection service description information and the identifier of the first communication device, where the association information is sent by the second communication device.

In some embodiments, the privacy protection service description information includes at least one of the following:
a privacy protection service identifier list;
a privacy protection level, where a higher privacy protection level means that it is more difficult for the first communication device to infer original service data from the privacy-protected service data;
a model training indication, indicating whether the service data requires model training; and
a data request indication, indicating data requirements of the service data.

In some embodiments, the data request indication includes at least one of the following:
sample type;
sample quantity;
sample validity period;
sample range; and
sample collection method.

In some embodiments, when the model training indication indicates that the service data requires model training, the privacy protection service description information further includes at least one of the following:
model training filter information, including at least one of the following: model algorithm type information or identifier information, model algorithm configuration information, model performance, and model data requirements; and
a joint training indication, indicating whether the service data requires the first communication device and the third communication device to jointly perform model training.

In some embodiments, the parsing result includes at least one of the following:
a privacy protection level corresponding to the service data; and
whether model training is performed on the service data.

In some embodiments, the privacy protection level corresponding to the service data adopts any one of the following:
a first privacy protection level requested by the first communication device;
a minimum privacy protection level supported by the third communication device; and
a privacy protection level selected by the third communication device from a set of privacy protection level, where the set of privacy protection level includes the first privacy protection level and a privacy protection level supported by the service data.

In some embodiments, the privacy protection level determines a scrambling algorithm for the third communication device to perform privacy protection for the service data, and a higher privacy protection level results in more iterations of the scrambling algorithm.

The privacy protection information processing apparatus in the embodiments of this application may be an electronic device, for example, an electronic device having an operating system, or may be a component in an electronic device, for example, an integrated circuit or a chip. The electronic device may be a terminal or another device other than terminals. For example, the terminal may include but is not limited to the types of the terminal 11 listed above, and the another device may be a server, a network attached storage (Network Attached Storage, NAS), or the like. This is not specifically limited in the embodiments of this application.

The privacy protection information processing apparatus provided in the embodiments of this application can implement the processes implemented in the method embodiments in FIG. 2 to FIG. 6, with the same technical effects achieved. To avoid repetition, details are not described herein again.

Optionally, as shown in FIG. 10, an embodiment of this application further provides a communication device 600 including a processor 601 and a memory 602. The memory 602 stores a program or instructions capable of running on the processor 601. For example, if the communication device 600 is a network-side device, when the program or instructions are executed by the processor 601, the steps of the foregoing privacy protection information processing method embodiments are implemented, with the same technical effects achieved. To avoid repetition, details are not described herein again. To avoid repetition, details are not described herein again.

An embodiment of this application further provides a communication system including a first communication device, a second communication device, and a third communication device. The first communication device may be configured to implement the steps of the privacy protection information processing method described above, the second communication device may be configured to implement the steps of the privacy protection information processing method described above, and the third communication device may be configured to implement the steps of the privacy protection information processing method described above.

An embodiment of this application further provides a readable storage medium. The readable storage medium stores a program or instructions. When the program or instructions are executed by a processor, the processes of the foregoing privacy protection information processing method embodiments are implemented, with the same technical effects achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing privacy protection information processing method embodiments, with the same technical effects achieved. To avoid repetition, details are not described herein again.

It should be understood that the chip mentioned in this embodiment of this application may also be referred to as a system-level-chip, a system chip, a chip system, or a system-on-chip, or the like.

An embodiment of this application further provides a computer program/program product, where the computer program/program product is stored in a storage medium, and the computer program/program product is executed by at least one processor to implement the processes of the foregoing privacy protection information processing method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from the order described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A privacy protection information processing method, comprising:
sending, by a first communication device, a privacy protection service request message to a second communication device, wherein the privacy protection service request message comprises an identifier of the first communication device and privacy protection service description information; and
receiving, by the first communication device, privacy-protected service data returned by the second communication device.

2. The method according to claim 1, wherein the method further comprises:
receiving, by the first communication device, a pre-configured set of privacy protection service description information from the second communication device, wherein the pre-configured set of privacy protection service description information is sent by a third communication device to the second communication device;
selecting and storing, by the first communication device, target privacy protection service description information, wherein the target privacy protection service description information is at least one piece of privacy protection service description information in the set of privacy protection service description information; and
sending, by the first communication device, the target privacy protection service description information to the second communication device.

3. The method according to claim 1 or 2, wherein the privacy protection service description information comprises at least one of the following:
a privacy protection service identifier list;
a privacy protection level, wherein a higher privacy protection level means that it is more difficult for the first communication device to infer original service data from the privacy-protected service data;
a model training indication, indicating whether the service data requires model training; and
a data request indication, indicating data requirements of the service data.

4. The method according to claim 3, wherein the data request indication comprises at least one of the following:
sample type;
sample quantity;
sample validity period;
sample range; and
sample collection method.

5. The method according to claim 3, wherein when the model training indication indicates that the service data requires model training, the privacy protection service description information further comprises at least one of the following:
model training filter information, comprising at least one of the following: model algorithm type information or identifier information, model algorithm configuration information, model performance, and model data requirements; and
a joint training indication, indicating whether the service data requires the first communication device and the third communication device to jointly perform model training.

6. The method according to claim 2, wherein the first communication device is a third-party network element, the second communication device is a network exposure function network element, and the third communication device is a core-network network element.

7. A privacy protection information processing method, comprising:
receiving, by a second communication device, a privacy protection service request message sent by a first communication device, wherein the privacy protection service request message comprises an identifier of the first communication device and privacy protection service description information;
after verifying that the first communication device is authorized to acquire a privacy protection service, sending, by the second communication device, the privacy protection service request message to a third communication device;
receiving, by the second communication device, privacy-protected service data sent by the third communication device; and
sending, by the second communication device, the privacy-protected service data to the first communication device.

8. The privacy protection information processing method according to claim 7, wherein before the sending the privacy protection service request message to the third communication device, the method further comprises:
verifying, by the second communication device, the privacy protection service request message based on previously-stored privacy protection service description information, and determining that the first communication device is authorized to acquire a privacy protection service.

9. The privacy protection information processing method according to claim 8, wherein the method further comprises:
receiving, by the second communication device, a pre-configured set of privacy protection service description information sent by the third communication device;
sending, by the second communication device, the pre-configured set of privacy protection service description information to the first communication device;
receiving, by the second communication device, target privacy protection service description information sent by the first communication device, wherein the target privacy protection service description information is at least one piece of privacy protection service description information in the set of privacy protection service description information;
storing, by the second communication device, the target privacy protection service description information, and associating the target privacy protection service description information with the identifier of the first communication device; and
sending, by the second communication device, association information of the target privacy protection service description information and the identifier of the first communication device to the third communication device.

10. The privacy protection information processing method according to claim 8 or 9, wherein the privacy protection service description information comprises at least one of the following:
a privacy protection service identifier list;
a privacy protection level, wherein a higher privacy protection level means that it is more difficult for the first communication device to infer original service data from the privacy-protected service data;
a model training indication, indicating whether the service data requires model training; and
a data request indication, indicating data requirements of the service data.

11. The method according to claim 10, wherein if target privacy protection service description information associated with the identifier of the first communication device comprises the privacy protection service description information in the privacy protection service request message, it is determined that the first communication device is authorized to acquire a privacy protection service.

12. The method according to claim 10, wherein the data request indication comprises at least one of the following:
sample type;
sample quantity;
sample validity period;
sample range; and
sample collection method.

13. The method according to claim 10, wherein when the model training indication indicates that the service data requires model training, the privacy protection service description information further comprises at least one of the following:
model training filter information, comprising at least one of the following: model algorithm type information or identifier information, model algorithm configuration information, model performance, and model data requirements; and
a joint training indication, indicating whether the service data requires the first communication device and the third communication device to jointly perform model training.

14. The method according to claim 7, wherein the first communication device is a third-party network element, the second communication device is a network exposure function network element, and the third communication device is a core-network network element.

15. A privacy protection information processing method, comprising:
receiving, by a third communication device, a privacy protection service request message sent by a second communication device, wherein the privacy protection service request message comprises an identifier of a first communication device and privacy protection service description information;
parsing, by the third communication device, the privacy protection service request message, collecting service data of a privacy protection service based on the privacy protection service description information, and performing privacy protection for the service data based on a parsing result; and
sending, by the third communication device, privacy-protected service data to the second communication device.

16. The method according to claim 15, wherein the method further comprises:
sending, by the third communication device, a pre-configured set of privacy protection service description information to the second communication device; and
receiving, by the third communication device, association information of target privacy protection service description information and the identifier of the first communication device, wherein the association information is sent by the second communication device.

17. The method according to claim 15 or 16, wherein the privacy protection service description information comprises at least one of the following:
a privacy protection service identifier list;
a privacy protection level, wherein a higher privacy protection level means that it is more difficult for the first communication device to infer original service data from the privacy-protected service data;
a model training indication, indicating whether the service data requires model training; and
a data request indication, indicating data requirements of the service data.

18. The method according to claim 17, wherein the data request indication comprises at least one of the following:
sample type;
sample quantity;
sample validity period;
sample range; and
sample collection method.

19. The method according to claim 17, wherein when the model training indication indicates that the service data requires model training, the privacy protection service description information further comprises at least one of the following:
model training filter information, comprising at least one of the following: model algorithm type information or identifier information, model algorithm configuration information, model performance, and model data requirements; and
a joint training indication, indicating whether the service data requires the first communication device and the third communication device to jointly perform model training.

20. The method according to claim 17, wherein the parsing result comprises at least one of the following:
a privacy protection level corresponding to the service data; and
whether model training is performed on the service data.

21. The method according to claim 20, wherein the privacy protection level corresponding to the service data adopts any one of the following:
a first privacy protection level requested by the first communication device;
a minimum privacy protection level supported by the third communication device; and
a privacy protection level selected by the third communication device from a set of privacy protection level wherein the set of privacy protection level comprises the first privacy protection level and a privacy protection level supported by the service data.

22. The method according to claim 17, wherein
the privacy protection level determines a scrambling algorithm for the third communication device to perform privacy protection for the service data, and a higher privacy protection level results in more iterations of the scrambling algorithm.

23. A privacy protection information processing apparatus, comprising:
a first sending module, configured to send a privacy protection service request message to a second communication device, wherein the privacy protection service request message comprises an identifier of a first communication device and privacy protection service description information; and
a first receiving module, configured to receive privacy-protected service data returned by the second communication device.

24. A privacy protection information processing apparatus, comprising:
a second receiving module, configured to receive a privacy protection service request message sent by a first communication device, wherein the privacy protection service request message comprises an identifier of the first communication device and privacy protection service description information;
a second sending module, configured to send the privacy protection service request message to a third communication device after verifying that the first communication device is authorized to acquire a privacy protection service;
the second receiving module is further configured to receive privacy-protected service data sent by the third communication device; and
the second sending module is further configured to send the privacy-protected service data to the first communication device.

25. A privacy protection information processing apparatus, comprising:
a third receiving module, configured to receive a privacy protection service request message sent by a second communication device, wherein the privacy protection service request message comprises an identifier of a first communication device and privacy protection service description information;
a processing module, configured to parse the privacy protection service request message, collect service data of the privacy protection service based on the privacy protection service description information, and perform privacy protection for the service data based on a parsing result; and
a third sending module, configured to send privacy-protected service data to the second communication device.

26. A communication device, comprising a processor and a memory, wherein the memory stores a program or instructions capable of running on the processor, and when the program or instructions are executed by the processor, the steps of the privacy protection information processing method according to any one of claims 1 to 22 are implemented.

27. A readable storage medium, wherein the readable storage medium stores a program or instructions, and when the program or instructions are executed by a processor, the steps of the privacy protection information processing method according to any one of claims 1 to 22 are implemented.
